(19) Europäisches Patentamt / European Patent Office / Office européen des brevets

(11) **EP 1 420 198 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***F16K 41/10*** *(2006.01)*

(21) Anmeldenummer: **03025265.4**

(22) Anmeldetag: **06.11.2003**

(54) **Schliessglied-Einheit für eine balggedichtete Ventilstangendurchführung in einem Hubventil**

Closing member unit for a bellows-sealed valve rod in a lift valve

Unité de membre de fermeture pour une tige de valve soufflet-scellée dans une soupape à levée

(84) Benannte Vertragsstaaten:
**AT BE BG CH CY CZ DE DK EE ES FI FR GB GR HU IE IT LI LU MC NL PT RO SE SI SK TR**

(30) Priorität: **14.11.2002 DE 10252944**

(43) Veröffentlichungstag der Anmeldung:
**19.05.2004 Patentblatt 2004/21**

(73) Patentinhaber: **GEA Tuchenhagen GmbH
21514 Büchen (DE)**

(72) Erfinder:
• **Wiedenmann, Willi
73469 Riesbürg (DE)**
• **Schmid, Werner
89522 Heidenheim (DE)**
• **Sauer, Martin
86687 Kaisheim (DE)**
• **Wengert, Holger
73441 Bopfingen (DE)**

(74) Vertreter: **Hauck Patent- und Rechtsanwälte
Postfach 11 31 53
20431 Hamburg (DE)**

(56) Entgegenhaltungen:
EP-A- 0 862 006       DE-A- 2 048 943
DE-A- 2 842 813       DE-A- 19 957 306
DE-U- 9 002 032       US-A- 6 145 810

**Beschreibung**

<u>TECHNISCHES GEBIET</u>

Die Erfindung betrifft ein Hubventil mit einer balggedichteten Ventilstangendurchführung, enthaltend eine Schließglied-Einheit, wobei letztere ein Verschlussteil, einen Balg und einen Anschlussflansch umfasst und der Balg, der insbesondere als Faltenbalg oder Wellrohr ausgebildet ist und mit wenigstens einer aktiven Balgfalte eine das Hubventil betätigende Ventilstange koaxial umschließt, die das Verschlussteil mit einem Stellantrieb des Hubventils verbindet, einerseits mit dem Verschlussteil verbunden ist und andererseits in den Anschlussflansch übergeht, der in einem Gehäuse des Hubventils abgedichtet eingespannt ist.

<u>STAND DER TECHNIK</u>

Ein Hubventil der gattungsgemäßen Art (DE 28 42 813 A1) findet Anwendung in einem sog. Prozessventil zur Durchführung steriler Arbeitsprozesse, wenn ein Höchstmaß an Prozesssicherheit gefordert wird. Derartige sterile Arbeitsprozesse werden unter anderem in der Brauerei-, Getränke- und Nahrungsmittelindustrie sowie in der Pharmazie, Feinchemie, Biotechnologie und kosmetischen Industrie gefordert.

Die in Rede stehenden Hubventile, die vorzugsweise als einfach oder doppeltdichtende Absperrventile ausgeführt und entsprechend eingesetzt werden, besitzen ein Verschlussteil, bei dem wenigstens eine Komponente der Öffnungs- und Schließbewegung senkrecht zu den Sitzflächen gerichtet ist. Die Durchführung der das Verschlussteil betätigenden Ventilstange durch das Ventilgehäuse wird mit dem Balg überbrückt, der die Ventilstange konzentrisch umschließt und integraler Bestandteil der Schließglied-Einheit ist. Dieser Balg, der als Faltenbalg (DE 198 47 294 A1; DE 28 42 813 A1), Wellrohr oder Membran (EP 0 508 658 B1) ausgebildet sein kann, erstreckt sich in der Regel vom Verschlussteil bis zu jenem Bereich des Ventilgehäuses, welches von der Ventilstange durchdrungen ist.

Eine derartige Ventilstangenabdichtung mittels eines Balges hat den Vorteil, dass kein Dichtungsspalt zwischen der in axialer Richtung verschieblichen Ventilstange und dem ortsfesten Ventilgehäuse vorhanden ist, in den durch die Relativbewegung der Ventilstange gegenüber dem Ventilgehäuse eine Produktverschleppung stattfinden kann. Es ist bekannt, dass derartige Dichtungsspalte sanitäre Problemzonen darstellen, in denen Bakterien- oder Keimbildung stattfinden kann, wodurch dann infolge der Ventilstangenbewegung, des sog. "Fahrstuhleffektes", Reinfektionen des Produktes im Ventilgehäuse hervorgerufen werden können.

Für sterile Arbeitsprozesse, insbesondere in der Brauerei-, Getränke- und Nahrungsmittelindustrie sowie in der Pharmazie, Feinchemie, Biotechnologie und kosmetischen Industrie, ist die Anwendung eines Balges zur Abdichtung einer Ventilstangendurchführung obligatorisch. Aus der vorgenannten Druckschrift DE 198 47 294 A1 ist ein Hubventil bekannt, das einen mit einem konischen Sitz in einem Ventilgehäuse zusammenwirkenden Verschlussteil mit entsprechender Ringdichtfläche aufweist, wobei der Verschlussteil über eine Ventilstange an einem Stellantrieb angeschlossen und mit einem die Ventilstange koaxial umgebenden, die Ventilstangenabdichtung bildenden Balg verbunden ist. Dieser Balg ist als sog. Faltenbalg ausgebildet und weist an seinem freien Ende einen Anschlussflansch mit einer konischen Dichtfläche auf, die gegen eine komplementäre Ringsitzfläche des Gehäuses anliegt, wobei der Verschlussteil, der Faltenbalg und sein Anschlussflansch eine als Ganzes auswechselbare, nach oben offene, rotationssymmetrische Schließglied-Einheit bilden. Dabei ist diese Schließglied-Einheit aus einem Polytetrafluorethylen-Werkstoff (PTFE, beispielsweise Teflon) hergestellt, der als positive Eigenschaften hohe Elastizität, chemische Widerstandsfähigkeit und eine lange Lebensdauer unter Inkaufnahme einer relativ großen plastischen Duktilität (starke Neigung zum "Fließen" bzw. "Kriechen") aufweist.

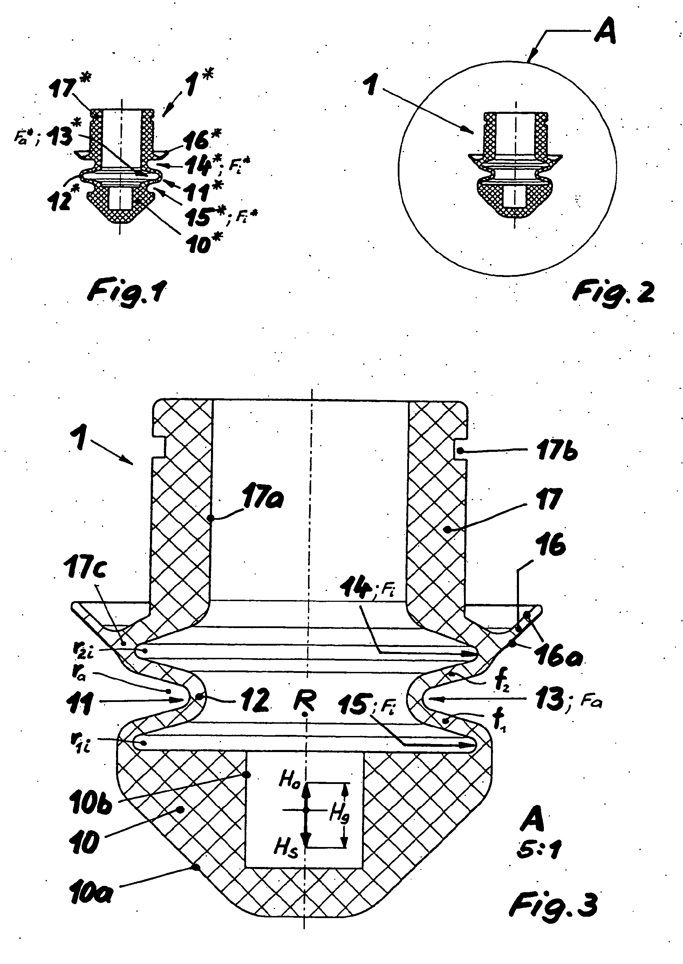

Der in der Schließglied-Einheit integrativ angeordnete Faltenbalg weist, bezogen auf sein verschlussteilseitiges Ende einerseits und sein schaftseitiges Ende andererseits, eine sog. "nach außen liegende" Faltengeometrie auf (**Figur 1**). Dies bedeutet, dass eine aktive Balgfalte, die voll ausgebildet ist und an ihren beiden Flankenteilen volle Duktilität besitzt, so gerichtet ist, dass das gemeinsame Ende der Flankenteile konvex nach außen zeigt und als vorspringender Balgfaltenteil in das umgebende Medium hineinragt. Demnach ist der Zwischenraum der Balgfalte, der von den beiden an dem gemeinsamen Ende zusammengeführten Flankenteile begrenzt wird, zum Innenraum des Faltenbalges hin orientiert; er ist somit mediumabgewandt. Diese Faltengeometrie bedingt wiederum, dass sich einerseits durch den Anschluss der Balgfalte an den Verschlussteil und andererseits an den Schaft jeweils eine sog. inaktive Balgfalte ergibt, die jeweils auf der einen Seite von der Flanke der benachbarten aktiven Balgfalte und auf der anderen Seite vom Verschlussteil bzw. dem Schaft begrenzt ist. Diese beiden inaktiven Balgfalten öffnen sich damit hinsichtlich ihres Zwischenraumes jeweils zur Umgebung des Faltenbalges hin; sie liegen somit in der Strömung des umgebenden Mediums, sie sind mediumzugewandt.

Eine einstückige Schließglied-Einheit für ein aseptisches Doppelsitzventil ist aus der DE 199 57 306 A1 bekannt. Diese Schließglied-Einheit besteht aus zwei relativ zueinander beweglichen Schließgliedern, von denen das abhängig angetriebene, bezogen auf eine senkrechte Normallage des Doppelsitzventils, oben liegende Schließglied ein Verschlussteil aufweist, welches über einen Balg mit einem im Gehäuse des Doppelsitzventils abgedichtet eingespannten Anschlussflansch verbunden ist. Der Balg umschließt koaxial eine die Schließglied-Einheit über einen Stellantrieb betätigende, das Gehäuse im Bereich des Anschlussflansches durchdringende Ventilstange. Auch dieser in der Schließglied-Einheit integrativ angeordnete Balg weist, bezogen auf sein verschlussteilseitiges Ende einerseits und sein anschlussflanschseitiges Ende andererseits, eine sog. "nach außen liegende" Faltengeometrie auf (Figur 1), wie sie vorstehend bereits erörtert wurde.

Die DE 28 42 813 A1 beschreibt ein aseptisches Ventil, das einen in einem Ventilgehäuse untergebrachten und mit einem entsprechenden Sitz zusammenwirkenden Ventilteller aufweist, der über eine Spindel an einen Stellantrieb angeschlossen ist und der außerdem einen die Spindel koaxial umgebenden, die jeweilige Produktflüssigkeit von der Spindel abhaltenden Balg trägt, der seinerseits mit dem noch freien Ende an einem Ringquerschnitt des Ventilgehäuses angreift. Dabei bilden der Ventilteller, der von ihm getragene Balg und ein vom Ventilgehäuse getrennt hergestellter Anschlussquerschnitt eine durch Klemm- und/oder Schraubwirkung festgehaltene und als Ganzes auswechselbare Ersatz-Einheit. Der in der Ersatz-Einheit integrativ angeordnete, als Faltenbalg ausgebildet Balg ist an seinem jeweiligen Ende mit eher weniger als einer halben Balgfalte an dem Ventilteller bzw. dem Anschlussquerschnitt angeschlossen. Da das jeweilige Ende nur eine begrenzte Duktilität besitzt und eher als inaktive denn als aktive halbe Balgfalte wirkt, weist auch dieser bekannte Faltenbalg eine sog. "nach außen liegende" Faltengeometrie auf.

In Abhängigkeit vom Hub, den der Verschlussteil im Hubventil auszuführen hat, und der spezifischen Duktilität des Balgwerkstoffes (PTFE) bestimmt sich die notwendige Anzahl n der aktiven Balgfalten. Kleinventile (kleine Nennweiten) mit entsprechend kurzen Hüben, beispielsweise 2 bis 3 mm, kommen in der Regel mit einer einzigen aktiven Balgfalte aus (n = 1). Hubventile größerer Nennweite besitzen Bälge mit vier bis sechs aktiven Balgfalten (n = 4 bis 6).

Aus der vorstehend kurz umrissenen Faltengeometrie ergibt sich,

- dass ein Balg mit einer Anzahl $F_a{}^* = n$ aktiven Balgfalten auch die gleiche Anzahl n "nach außen liegende" Balgfalten aufweist. Da die Randausführung des Balges zwangsläufig in der vorstehend beschriebenen Weise ausgeführt ist, besitzt dieser Balg mit $F_a{}^* = n$ aktiven Balgfalten in jedem Falle zwei inaktive Balgfalten $F_i{}^*$ ($F_i{}^* = 2$).
- Ein Balg mit drei aktiven Balgfalten ($F_a{}^* = n = 3$) besitzt somit drei "nach außen liegende" Balgfalten und $F_i{}^* = 2$ inaktive Balgfalten am Rand.
- Ein Balg für ein Kleinventil mit einer einzigen aktiven Balgfalte ($F_a{}^* = n = 1$) besitzt eine "nach außen liegende" Balgfalte und $F_i = 2$ inaktive Balgfalten am Rand.

Beim Schalten des Ventils wird die Faltengeometrie gestaucht (in der Offenstellung) bzw. gezogen (in der Schließstellung). In der Praxis hat sich gezeigt, dass es speziell beim Schließvorgang, wenn die Faltengeometrie unter zunehmender Zugspannung steht, infolge Druck- und Temperaturbelastung zu Verformungen an der Faltengeometrie kommen kann. Diese Verformungen lassen sich im Bereich der Balgfalten in der Regel nicht durch stützende Maßnahmen verhindern, es sei denn, es würde von aufwendigen Maßnahmen der Balgfaltenarmierung Gebrauch gemacht. Die Folge der hinzunehmenden Verformungen sind oftmals frühzeitige Ausfälle bzw. Defekte des Balgs. Ein Balg mit $F_a{}^* = n$ aktiven Balgfalten weist, wie vorstehend dargelegt, somit die gleiche Anzahl n "nach außen liegende" Balgfalten auf. Diese Balgfalten $F_a{}^* = n$ sind sämtlich festigkeitskritische Balgfalten $F_{FK}{}^*$, sodass der Zusammenhang

$$F_{FK}{}^* = F_a{}^* = n \qquad\qquad (1)$$

formuliert werden kann.

In der Offenstellung des Hubventils ist die Faltengeometrie gestaucht und die Zwischenräume r zwischen den Balgfalten sind dadurch verengt. Verengt werden durch die Stauchung in erster Linie die nach außen gerichteten Zwischenräume $r_a$ zwischen den aktiven Balgfalten $F_a{}^*$, aber auch jene, wenn auch nicht in gleichem Maße, zwischen den inaktiven Balgfalten $F_i{}^*$ an den Rändern. Da die Zwischenräume von Zeit zu Zeit im Durchfluss gereinigt werden müssen (CIP-Reinigung) und sich dabei das Hubventil in der Regel in der Offenstellung befindet, erschwert die Verengung der Zwischenräume r zwischen den Balgfalten diesen Reinigungsprozess.

Neben der vorstehend als festigkeitskritisch beschriebenen Anzahl von Balgfalten $F_{FK}{}^*$ weist ein Balg demnach $F_{RK}{}^*$ reinigungskritische Balgfalten auf. Für einen Balg mit $F_a{}^* = n = 3$ aktiven Balgfalten ergeben sich somit $F_{RK}{}^* = n + 1 = 4$ reinigungskritische Balgfalten (zwei Zwischenräume zwischen den drei aktiven Balgfalten $F_a{}^*$ und jeweils eine inaktive Balgfalte $F_i{}^*$ an jedem der beiden Ränder).

In Analogie zur vorstehenden Formulierung des Zusammenhangs zwischen aktiven Balgfalten $F_a{}^*$ und festigkeitskritischen Balgfalten $F_{FK}{}^*$ lässt sich hinsichtlich der Anzahl der reinigungskritischen Balgfalten $F_{RK}{}^*$ folgender Zusammenhang formulieren:

$$F_{RK}{}^* = F_a{}^* + 1 = n + 1. \qquad (2)$$

Unter strömungstechnischen Gesichtspunkten weist eine "nach außen liegende" Faltengeometrie darüber hinaus den Nachteil auf, dass sich sog. "Strömungsschatten" bei seitlicher Anströmung ergeben, welche sich wiederum nachteilig auf die Reinigungseffizienz auswirken. Für eine Quantifizierung der "Strömungsschatten" in Abhängigkeit von der Anzahl der aktiven Balgfalten $F_a{}^*$ gilt der gleiche Zusammenhang wie hinsichtlich der reinigungskritischen Balgfalten $F_{RK}{}^*$.

Es ist Aufgabe der Erfindung, das Hubventil der gattungsgemäßen Art im Bereich seines Balges hinsichtlich der Faltengeometrie so zu verändern, dass insbesondere die Festigkeit und Reinigungsfähigkeit der Balgfalten im umströmenden Medium gegenüber den bekannten Ausführungsformen verbessert wird.

ZUSAMMENFASSUNG DER ERFINDUNG

Diese Aufgabe wird durch ein Hubventil mit den Merkmalen des Anspruchs 1 gelöst. Vorteilhafte Ausgestaltungen sind Gegenstand der Unteransprüche

Die Schließglied-Einheit des erfindungsgemäßen Hubventils ist einstückig ausgebildet und sie setzt sich an der Seite des Anschlussflansches in einem im Gehäuse des Hubventils eingespannten, hülsenförmigen Schaft fort. Bei der sog. "innen liegenden" Faltengeometrie gemäß der Erfindung weist das die beiden Flanken der aktiven Balgfalte(n) verbindende jeweilige Ende zum Innenraum des Balges hin, sodass sich der zwischen den Flanken gebildete außenseitige Zwischenraum $r_a$ zum umgebenden Medium hin öffnet (mediumzugewandte Faltengeometrie im Bereich der aktiven Balgfalten). Die verschlussteilseitige Flanke der dem Verschlussteil unmittelbar benachbarten aktiven Balgfalte und die schaftseitige Flanke der dem Schaft unmittelbar benachbarten aktiven Balgfalte sind dabei jeweils so weit, in radialer Richtung gesehen, außen am Verschlussteil bzw. am Schaft angeformt, dass sich bei dieser Ausgestaltung im jeweiligen Endbereich des Balges keine im umgebenden Medium liegende inaktive Balgfalte mehr ergibt. Vielmehr ist dadurch ein zwischen dem Verschlussteil und der verschlussteilseitigen Flanke einerseits gebildeter verschlussteilseitiger innerer Zwischenraum $r_{1i}$ und ein zwischen dem Schaft und der schaftseitigen Flanke andererseits gebildeter schaftseitiger innerer Zwischenraum $r_{2i}$ entstanden, der jeweils zum Innenraum hin geöffnet ist (mediumabgewandte Faltengeometrie im Bereich der inaktiven Balgfalte).

Eine vorteilhafte Ausgestaltung des vorgeschlagenen. Hubventils gemäß der Erfindung sieht vor, dass die verschlussteilseitige Flanke mit einer gegenüber der Umgebung des Balges konvexen Krümmung und, in radialer Richtung gesehen, außenseits bündig in den Verschlussteil übergeht. Dadurch wird eine inaktive Balgfalte in Gänze oder in reduzierter Ausprägung vermieden, wie sie regelmäßig bei Balgausführungen nach dem Stand der Technik vorzufinden ist.

Eine weitere Ausführungsform des vorgeschlagenen Hubventils gemäß der Erfindung sieht vor, dass sich an die schaftseitige Flanke ein Verbindungsbereich anschließt, der gegenüber der Umgebung des Balges eine konvexe Krümmung aufweist, und dass der Verbindungsbereich in den Schaft, in radialer Richtung gesehen, von außen übergeht. Auch diese Maßnahme vermeidet eine nach dem Stand der Technik in diesem Bereich regelmäßig vorzufindende inaktive Balgfalte.

Wird, wie dies eine andere Ausführungsform vorschlägt, an den Verbindungsbereich, in radialer Richtung gesehen, außenseits der Anschlussflansch angeformt, der sich kragenförmig zum Schaft hin erweitert, dann wird dadurch der Anschlussflansch so weit, wie dies nur irgend möglich ist, an den Balg herangeführt, sodass reinigungskritische Bereiche an dieser Stelle von vornherein vermieden werden. Eine optimale stationäre Einbettung und Abdichtung der Schließglied-Einheit im Gehäuse des Hubventils wird dadurch sichergestellt, dass der Anschlussflansch, wie dies eine weitere Ausführungsform vorsieht, membranförmig ausgebildet und innen- und außenseits jeweils von einer konischen Dichtfläche berandet ist.

Eine quantitative Beschreibung der erfindungsgemäßen Faltengeometrie ergibt die folgenden Zusammenhänge.

Bei $F_a = n$ aktiven Balgfalten ergibt die erfindungsgemäße Faltengeometrie

$$F_{RK} = F_a = n \qquad (3)$$

reinigungskritische Balgfalten und

$$F_{FK} = F_a - 1 = n - 1 \qquad\qquad (4)$$

festigkeitskritische Balgfalten.

Der aus diesen Zusammenhängen sich ergebende Vorteil wird besonders signifikant bei sog. Kleinventilen, bei denen die Schließglied-Einheit mit einer einzigen aktiven Balgfalte ($F_a = n = 1$) auskommt. Hier ergibt sich gemäß Gleichung (3) eine reinigungskritische Balgfalte ($F_{RK} = F_a = n = 1$) und gemäß Gleichung (4) keine festigkeitskritische Balgfalte ($F_{FK} = F_a - 1 = n - 1 = 1 - 1 = 0$).

Im Gegensatz hierzu weist ein Balg nach dem Stand der Technik gemäß Gleichung (2) mit einer einzigen aktiven Balgfalte ($F_a{}^* = n = 1$) somit $F_{RK}{}^* = F_a{}^* + 1 = 1 + 1 = 2$ reinigungskritische Balgfalten und gemäß Gleichung (1) eine festigkeitskritische Balgfalte $F_{FK}{}^* = F_a{}^* = 1$ auf.

Die vorstehenden quantitativen Zusammenhänge sind in der nachfolgenden Tabelle zusammengestellt.

<div align="center">Tabelle</div>

| Merkmal | Faltengeometrie | |
|---|---|---|
| | Stand der Technik | Erfindung |
| **aktive Balgfalten n** | $F_a{}^* = n$ | $F_a = n$ |
| **reinigungskritische Balgfalten** | $F_{RK}{}^* = F_a{}^* + 1 = n + 1$ | $F_{RK} = F_a = n$ |
| **festigkeitskritische Balgfalten** | $F_{FK}{}^* = F_a{}^* = n$ | $F_{FK} = F_a - 1 = n - 1$ |

Man erkennt, dass die Faltengeometrie gemäß der Erfindung, unabhängig von der jeweiligen Anzahl n der erforderlichen aktiven Balgfalten $F_a$, sowohl hinsichtlich der reinigungskritischen Balgfalten $F_{RK}$ als auch hinsichtlich der festigkeitskritischen Balgfalten $F_{FK}$ am vorteilhaftesten ist.

Es hat sich darüber hinaus gezeigt, wie vorstehend bereits dargelegt, dass die "nach innen liegende" Faltengeometrie speziell in der Schließstellung des Hubventils, wenn Zugspannungen im Balg vorherrschen, druckstandfester als Faltengeometrien gemäß dem Stand der Technik sind. Darüber hinaus ist die erfindungsgemäß vorgeschlagene Faltengeometrie reinigungstechnisch ebenfalls besser, da sie in jedem Falle weniger reinigungskritische Balgfalten hat und dadurch bei gleichen äußeren Geometriebedingungen einen jeweils größeren Faltenabstand aufweist.

Die vorgeschlagene Faltengeometrie ist auch insgesamt strömungstechnisch günstiger, da geringere Strömungsschatten bei seitlicher Anströmung vorliegen. Die bessere Reinigungsfähigkeit wird auch noch durch die Tatsache unterstützt, dass die beiden inaktiven Balgfalten $F_i$ mediumsabgewandt sich zum Innenraum des Balges hin öffnen und somit nicht notwendigerweise zu reinigen sind.

KURZBESCHREIBUNGDER ZEICHNUNG

Die **Figur 1** zeigt im Mittelschnitt eine Schließglied-Einheit nach dem Stand der Technik, wie sie bislang für ein sog. Kleinventil mit einer einzigen aktiven Balgfalte $F_a{}^*$ zur Anwendung kommt.

Ein Ausführungsbeispiel einer Schließglied-Einheit mit den Merkmalen der Erfindung ist in den weiteren Figuren der Zeichnung dargestellt und wird nachfolgend beschrieben. Es zeigen

**Figur 2** ebenfalls im Mittelschnitt und mit gleichen äußeren Abmessungen wie die Schließglied-Einheit gemäß **Figur 1** eine erfindungsgemäße Schließglied-Einheit mit "innen liegender" Faltengeometrie und einer einzigen aktiven Balgfalte $F_a$ ($F_a = n = 1$) und

**Figur 3** gleichfalls im Mittelschnitt und im Maßstab 5:1 vergrößert die Schließ- glied-Einheit gemäß **Figur 2**.

DETAILLIERTE BESCHREIBUNG

Eine bekannte Schließglied-Einheit 1* (**Figur 1**) weist zwischen einem Verschlussteil 10* und einem Schaft 17* einen Balg 12* auf, der als sog. Faltenbalg ausgebildet ist und eine "nach außen liegende" Faltengeometrie 11* besitzt. Die einzige aktive Balgfalte 13* ($F_a{}^* = n = 1$) öffnet sich zum Innenraum des Faltenbalges 12* hin und ihre eine Flanke ist unter Bildung einer verschlussteilseitigen inaktiven Balgfalte 15* ($F_i{}^* = 1$) am Verschlussteil 10* und ihre andere Flanke ist unter Bildung einer gehäuseseitigen bzw. schaftseitigen inaktiven Balgfalte 14* ($F_i{}^* = 1$) an den Schaft 17* im Bereich eines membranförmig ausgebildeten Anschlussflansches 16* angeschlossen. Die beiden inaktiven Balgfalten 14* und 15* ($F_i{}^* = 2$) öffnen sich zur Umgebung der Schließglied-Einheit 1* hin und liegen somit im den Faltenbalg

<div align="center">5</div>

12* umgebenden Medium.

Auch eine erfindungsgemäße Schließglied-Einheit 1 (**Figuren 2 und 3**) weist, in gleicher Weise wie jene (1*) nach dem Stand der Technik, ein Verschlussteil 10 mit einer konischen Sitzfläche 10a und einen Schaft 17 mit einer in dessen endseitigem Bereich außenseits umlaufenden Befestigungsnut 17b auf. Der hülsenförmige Schaft 17 ist durchgängig mit einer Bohrung 17a versehen, die bis in einen Innenraum R eines den Verschlussteil 10 und den Schaft 17 miteinander stoffschlüssig verbindenden Balges 12 reicht, wobei letzterer auch hier in Form eines sog. Faltenbalges ausgeführt ist. Koaxial zur Bohrung 17a ist im Verschlussteil 10, zum Innenraum R des Faltenbalges 12 sich öffnend, eine zylindrische Ausnehmung 10b vorgesehen, in die beispielsweise eine nicht dargestellte Gewindebuchse zur Befestigung einer ebenfalls nicht dargestellten Ventilstange eingeformt ist. Durch die Ventilstange kann mittels eines Stellantriebes der Verschlussteil 10 gegenüber dem im Gehäuse des Hubventils eingespannten Schaft 17 um einen axialen Gesamthub $H_g$ in beiden Richtungen verschoben werden, wobei diese beiderseitige axiale Verschiebung, einerseits um einen Schließhub $H_s$ und andererseits um einen Öffnungshub $H_o$, durch elastische Verformung des Faltenbalges 12 zugelassen wird. Eine Verschiebung des Verschlussteils 10 um den Öffnungshub $H_o$ bewirkt eine Stauchung und eine Verschiebung um den Schließhub $H_s$ eine Streckung des Faltenbalges 12. Der Schließhub $H_s$ und der Öffnungshub $H_o$ ergeben zusammen den Gesamthub $H_g$, wobei sich der Schließhub $H_s$ und der Öffnungshub $H_o$ auf eine spannungsfreie Formgestalt der Schließglied-Einheit 1 beziehen, wie sie in den Figuren 2 und 3 dargestellt ist.

Der Faltenbalg 12 besitzt eine einzige aktive Balgfalte 13 ($F_a = n = 1$), die zwischen ihren beiden voll elastisch verformbaren Flanken f, einer verschlussteilseitigen Flanke $f_1$ und einer schaftseitigen Flanke $f_2$, einen zur Umgebung des Faltenbalgs 12 hin orientierten außenseitigen Zwischenraum $r_a$ bildet. Durch eine diesbezügliche "nach innen liegende" Faltengeometrie 11 wird die aktive Balgfalte 13 druckstandfester gegenüber Druck- und Strömungskräften aus dem von außen auf den Faltenbalg 12 wirkenden Medium.

Weiterhin ist ersichtlich, dass der Faltenbalg 12 mit seiner dem Verschlussteil 10 zugewandten verschlussteilseitigen Flanke $f_1$ unmittelbar und, in radialer Richtung gesehen, so weit außen am Verschlussteil 10 angeformt ist, dass die bei einer Faltengeometrie 11* nach dem Stand der Technik (Figur 1) an dieser Stelle erforderliche mediumzugewandte inaktive Balgfalte (15*) entfällt. Dafür wird eine verschlussteilseitige inaktive Balgfalte 15 ($F_i = 1$) zwischen dem Verschlussteil 10 und der verschlussteilseitigen Flanke $f_1$ ausgeformt, wobei diese inaktive Balgfalte 15 mit einem verschlussteilseitigen inneren Zwischenraum $r_{1i}$ zum Innenraum R hin geöffnet ist und dadurch zwangsläufig nicht mehr dem den Faltenbalg 12 umgebenden Medium ausgesetzt ist.

Eine besonders vorteilhafte Ausgestaltung ergibt sich, wenn die verschlussteilseitige Flanke $f_1$ mit einer gegenüber der Umgebung des Balges 12 konvexen Krümmung und, in radialer Richtung gesehen, außenseits bündig in das Verschlussteil 10 übergeht.

Die dem Schaft 17 zugewandte schaftseitige Flanke $f_2$ ist unmittelbar und, in radialer Richtung gesehen, so weit außen am Schaft 17 angeformt, dass auch hier die bei der Schließglied-Einheit (1*) gemäß Stand der Technik (Figur 1) in diesem Bereich erforderliche mediumzugewandte inaktive Balgfalte (14*) entfällt. Eine schaftseitige inaktive Balgfalte 14 ($F_i = 1$) ergibt sich zwischen dem Schaft 17 und der schaftseitigen Flanke $f_2$, wobei diese inaktive Balgfalte 14 mit einem schaftseitigen inneren Zwischenraum $r_{2i}$ zum Innenraum R hin geöffnet ist und dadurch nicht von dem den Faltenbalg 12 umgebenden Medium beaufschlagt ist.

Eine besonders vorteilhafte Ausführungsform wird diesbezüglich dadurch realisiert, dass sich an die schaftseitige Flanke $f_2$ ein Verbindungsbereich 17c anschließt, der gegenüber der Umgebung des Balges 12 eine konvexe Krümmung aufweist, und dass der Verbindungsbereich 17c in den Schaft 17, in radialer Richtung gesehen, von außen übergeht.

In einem Verbindungsbereich 17c zwischen Schaft 17 und Faltenbalg 12 ist, in radialer Richtung gesehen, außenseits ein Anschlussflansch 16 angeformt, der sich kragenförmig zum Schaft 17 hin erweitert. In einer vorteilhaften Ausgestaltung der vorgeschlagenen Schließglied-Einheit 1 ist der Anschlussflansch 16 membranförmig ausgebildet und innen- und außenseits jeweils von einer konischen Dichtfläche 16a berandet, die für seine sichere stationäre Einbettung und Abdichtung in dem nicht dargestellten Ventilgehäuse sorgt.

Infolge des vorstehend auch quantitativ beschriebenen Zusammenhangs (s. auch Tabelle) ist die erfindungsgemäße Faltengeometrie 11 aufgrund des größeren Faltenabstandes weniger reinigungskritisch und auch strömungstechnisch günstiger als die Faltengeometrie (11*) nach dem Stand der Technik, da geringere Strömungsschatten bei seitlicher Anströmung vorliegen. Die bessere Reinigungsfähigkeit stützt sich u.a. auch auf die Tatsache, dass die beiden inaktiven Balgfalten 14 und 15 mediumabgewandt positioniert sind.

Wie vorstehend bereits qualitativ und quantitativ ausgeführt, bleiben die festigkeits-, reinigungs- und strömungstechnischen Vorteile, dargestellt am einfaltigen Ausführungsbeispiel, durchgängig auch für Bälge, insbesondere PTFE-Bälge, in mehrfaltiger Ausführung erhalten.

BEZUGSZEICHENLISTE DER VERWENDETEN ABKÜRZUNGEN

| 1    | Schließglied-Einheit |
|------|----------------------|
| 1 *  | Schließglied-Einheit nach dem Stand der Technik |
| 10   | Verschlussteil |
| 10a  | konische Sitzfläche |
| 10b  | zylindrische Ausnehmung |
| 11   | Faltengeometrie |
| 12   | Balg (insbesondere Faltenbalg oder Wellrohr) |
| 13   | aktive Balgfalte(n) $F_a$ |
| 14   | gehäuseseitige bzw. schaftseitige inaktive Balgfalte $F_i$ |
| 15   | verschlussteilseitige inaktive Balgfalte $F_i$ |
| 16   | Anschlussflansch |
| 16a  | konische Dichtfläche(n) |
| 17   | Schaft |
| 17a  | Bohrung |
| 17b  | Befestigungsnut |
| 17c  | Verbindungsbereich zwischen Schaft 17 und Balg 12 |

| f      | Flanken der aktiven Balgfalte(n) $F_a$ |
|--------|----------------------------------------|
| $f_1$  | verschlussteilseitige Flanke |
| $f_2$  | schaftseitige Flanke |
| r      | Zwischenraum zwischen einer Balgfalte |
| $r_a$  | außenseitiger Zwischenraum |
| $r_{1i}$ | verschlussteilseitiger innerer Zwischenraum |
| $r_{2i}$ | schaftseitiger innerer Zwischenraum |

| $F_a$          | aktive Balgfalte(n); Anzahl n |
|----------------|-------------------------------|
| $F_i$          | inaktive Balgfalte(n) |
| $F_{FK}$       | festigkeitskritische Balgfalte(n) |
| $F_{RK}$       | reinigungskritische Balgfalte(n) |
| $H_O$          | Öffnungshub, ausgehend von einer spannungsfreien Formgestalt |
| $H_S$          | Schließhub, ausgehend von einer spannungsfreien Formgestalt |
| $H_g = H_o + H_S$ | Gesamthub |
| R              | Innenraum des Balges |

\* als Zusatz: jeweilige Bezeichnung an einer Schließglied-Einheit 1 * nach dem Stand der Technik

**Patentansprüche**

**1.** Hubventil mit einer balggedichteten Ventilstangendurchführung, enthaltend eine Schließglied-Einheit (1), wobei letztere ein Verschlussteil (10), einen Balg (12) und einen Anschlussflansch (16) umfasst und der Balg (12), der insbesondere als Faltenbalg oder Wellrohr ausgebildet ist und mit wenigstens einer aktiven Balgfalte ($F_a$) eine das Hubventil betätigende Ventilstange koaxial umschließt, die den Verschlussteil (10) mit einem Stellantrieb des Hubventils verbindet, einerseits mit dem Verschlussteil (10) verbunden ist und andererseits in den Anschlussflansch (16) übergeht, der in einem Gehäuse des Hubventils abgedichtet eingespannt ist,
**dadurch gekennzeichnet,**

- **dass** die Schließglied- Einheit (1) einstückig ausgebildet ist,
- **dass** sich die Schließglied-Einheit (1) an der Seite des Anschlussflansches (16) in einem im Gehäuse des Hubventils eingespannten, hülsenförmigen Schaft (17) fortsetzt,
- **dass** das die beiden Flanken ($f_1$, $f_2$) der aktiven Balgfalte(n) (13; $F_a$) verbindende jeweilige Ende zum Innenraum (R) des Balges (12) hin weist,
- und **dass** die verschlussteilseitige Flanke ($f_1$) der dem Verschluss teil (10) unmittelbar benachbarten aktiven Balgfalte (13; $F_a$) und die schaftseitige Flanke ($f_2$) der dem Schaft (17) unmittelbar benachbarten aktiven Balgfalte (13; $F_a$) jeweils so weit, in radialer Richtung gesehen, außen am Verschlussteil (10) bzw. am Schaft (17) angeformt sind,
- **dass** ein zwischen dem Verschlussteil (10) und der verschlussteilseitigen Flanke ($f_1$) einerseits gebildeter verschlussteilseitiger innerer Zwischenraum ($r_{1i}$) und ein zwischen dem Schaft (17) und der schaftseitigen

Flanke ($f_2$) andererseits gebildeter schaftseitiger innerer Zwischen raum ($r_{2i}$) jeweils zum Innenraum (R) hin geöffnet sind.

**2.** Hubventil nach Anspruch 1,
**dadurch gekennzeichnet,**
**dass** die verschlussteilseitige Flanke ($f_1$) mit einer gegenüber der Umgebung des Balges (12) konvexen Krümmung und, in radialer Richtung gesehen, außenseits bündig in den Verschlussteil (10) übergeht.

**3.** Hubventil nach Anspruch 1 oder 2,
**dadurch gekennzeichnet,**
**dass** sich an die schaftseitige Flanke ($f_2$) ein Verbindungsbereich (17c) anschließt, der gegenüber der Umgebung des Balges (12) eine konvexe Krümmung aufweist, und dass der Verbindungsbereich (17c) in den Schaft (17), in radialer Richtung gesehen, von außen übergeht.

**4.** Hubventil nach Anspruch 3,
**dadurch gekennzeichnet,**
**dass** an den Verbindungsbereich (17c), in radialer Richtung gesehen, außenseits der Anschlussflansch (16) angeformt ist, der sich kragenförmig zum Schaft (17) hin erweitert.

**5.** Hubventil nach Anspruch 4,
**dadurch gekennzeichnet,**
**dass** der Anschlussflansch (16) membranförmig ausgebildet und innen- und außenseits jeweils von einer konischen Dichtfläche (16a) berandet ist.

**Claims**

**1.** Lift valve comprising a bellows-sealed valve rod passage, containing a closing member unit (1), said closing member unit comprising a closure part (10), a bellows (12) and a connecting flange (16) and the bellows (12) which is configured, in particular, as a folding bellows or corrugated tube, and with at least one active bellows fold ($F_a$) coaxially surrounds a valve rod actuating the lift valve, which connects the closure part (10) to an actuator of the lift valve, being connected, on the one hand, to the closure part (10) and, on the other hand, merging with the connecting flange (16), which is sealingly clamped in a housing of the lift valve,
**characterised**

* in that the closing member unit (1) is formed in one piece,
* in that the closing member unit (1) is extended on the side of the connecting flange (16) in a sleeve-shaped shaft (17) clamped in the housing of the lift valve,
* in that the respective end connecting the two flanks (fl, f2) of the active bellows fold(s) (13; Fa) faces towards the inner space (R) of the bellows (12),
* and in that the flank (f1) on the closure part side of the active bellows fold (13; Fa) immediately adjacent to the closure part (10) and the flank (f2) on the shaft side of the active bellows fold (13; Fa) immediately adjacent to the shaft (17) are integrally formed in each case, viewed in the radial direction, sufficiently far outside on the closure part (10) and/or on the shaft (17),
* in that an inner intermediate space (rli) on the closure part side formed, on the one hand, between the closure part (10) and the flank ($f_1$) on the closure part side and an inner intermediate space ($r_{2i}$) on the shaft side formed, on the other hand, between the shaft (17) and the flank ($f_2$) on the shaft side are respectively open towards the inner space (R).

**2.** Lift valve according to Claim 1, **characterised in that**, viewed in the radial direction, the flank ($f_1$) on the closure part side, with a convex curvature relative to the surroundings of the bellows (12), merges on the outside flush with the closure part (10).

**3.** Lift valve according to Claim 1 or 2, **characterised in that** a connecting region (17c) is attached to the flank ($f_2$) on the shaft side, said connecting region having a convex curvature relative to the surroundings of the bellows (12) and **in that**, viewed in the radial direction, the connecting region (17c) merges from the outside with the shaft (17).

**4.** Lift valve according to Claim 3, **characterised in that**, viewed in the radial direction, the connecting flange (16) is integrally formed outside on the connecting region (17c), said connecting flange widening in the shape of a collar towards the shaft (17).

5. Lift valve according to Claim 4, **characterised in that** the connecting flange (16) is configured in the shape of a diaphragm and in each case is bounded by a conical sealing surface (16a)on the inside and outside.

**Revendications**

1. Soupape à levée comportant une tige de valve soufflet scellée, contenant une unité de membre de fermeture (1), cette dernière comprenant une partie de fermeture (10), un soufflet (12) et une bride de raccordement (16), et le soufflet (12) qui est conçu en particulier comme un soufflet plissé ou tube ondulé et enferme coaxialement avec au moins un pli de soufflet actif ($F_a$) une tige de valve actionnant la soupape à levée, laquelle tige relie la partie de fermeture (10) à un actionneur de la soupape à levée, d'une part reliée à la partie de fermeture (10) et d'autre part dépassant dans la bride de raccordement (16) qui est montée étanche dans un carter de la soupape à levée, **caractérisée en ce que**,

   • l'unité de membre de fermeture (1) est formée d'un seul tenant,
   • l'unité de membre de fermeture (1) se poursuit sur le côté de la bride de raccordement (16) dans une tige (17) en forme de manchon montée dans le carter de la soupape à levée,
   • chaque extrémité reliant les deux flancs ($f_1$, $f_2$) du(des) pli(s) de soufflet actif(s) (13 ; $F_a$) est dirigée vers l'intérieur (R) du soufflet (12),
   • le flanc ($f_1$) côté partie de fermeture du pli de soufflet actif (13 ; $F_a$) directement adjacent à la partie de fermeture (10) et le flanc côté tige ($f_2$) du pli de soufflet actif (13 ; $F_a$) directement adjacent à la tige (17) sont formés tellement éloignés, vu dans le sens radial, de l'extérieur de la partie de fermeture (10) et/ou de la tige (17),
   • qu'un espace intermédiaire ($r_{1i}$) interne côté partie de fermeture formé d'une part entre la partie de fermeture (10) et le flanc ($f_1$) côté partie de fermeture et un espace intermédiaire ($r_{2i}$) interne côté tige formé d'autre part entre la tige (17) et le flanc côté tige ($f_2$) s'ouvrent respectivement vers l'espace intérieur (R).

2. Soupape à levée selon la revendication 1,
   **caractérisée en ce que**,
   le flanc ($f_1$) côté partie de fermeture dépasse avec une courbure convexe par rapport à l'environnement du soufflet (12), et vu dans le sens radial, côté extérieur en affleurement dans la partie de fermeture (10).

3. Soupape à levée selon les revendications 1 ou 2,
   **caractérisée en ce que**,
   une zone de jonction (17c) est rattachée au flanc ($f_2$) côté tige, cette zone de jonction (17c) présentant une courbure convexe vis-à-vis de l'environnement du soufflet (12), et **en ce que** la zone de jonction (17c) dépasse de l'extérieur dans la tige (17), vu dans le sens radial.

4. Soupape à levée selon la revendication 3,
   **caractérisée en ce que**,
   la bride de raccordement (16) qui s'élargit vers la tige (17) en forme de collerette est formée côté extérieur au niveau de la zone de jonction (17c), vu dans le sens radial.

5. Soupape à levée selon la revendication 4,
   **caractérisée en ce que**,
   la bride de raccordement (16) a une forme de membrane et est délimitée côtés intérieur et extérieur respectivement par une surface d'étanchéité conique (16a).

Fig.1

Fig.2

A
5:1

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2842813 A1
- DE 19847294 A1
- EP 0508658 B1
- DE 19957306 A1